# EUROPEAN PATENT APPLICATION

(11) **EP 1 428 539 A1**
(43) Date of publication of application: **16.06.2004**
(21) Application number: 04005950.3
(22) Date of filing: 21.09.2000
(51) Int. Cl.: A61L 2/23

(54) **Sterilising agents and methods**

(30) Priority: 23.09.1999 GB 9922415
(62) Divisional of application: 00964393.3
(71) Applicant: Allied Bio Corporation Limited, Oldham, Lancashire OL8 1QG (GB)
(72) Inventor: Halliwell, Larry, Dukinfield Cheshire SK16 5SH (GB); Latham, George, Springhead Oldham OL4 5UB (GB); Peel, Adrian, Royton OL2 6EU (GB)
(74) Representative: Appleton, Ben

(57) **Abstract**

A sterilising agent is provided for use in a generally enclosed airspace within a container, the sterilising block comprising a sterilising agent in the form of a sulphur dioxide activating compound which reacts with moisture in the airspace to release sulphur dioxide, wherein the sterilising agent further comprises a moderating compound, which inhibits or accelerates the release of sulphur dioxide from the block. The use of a block provides a sterilising composition which does not produce harmful dust during insertion into an airspace.

## Description

This invention relates to sterilising agents, in particular to those which, when activated, form sulphur dioxide, and also to a method of sterilising substantially enclosed airspaces.

It is well known to use sterilising agents which form sulphur dioxide to sterilise enclosed spaces. Such agents have been used in a wide variety of applications including sterilisation of fermentation bins and sanitary bins.

In the case of fermentation bins, granules or tablets of the sterilising agent are dissolved rapidly in water in the fermentation bin, which quickly releases large quantities of sulphur dioxide for fast sterilisation.

In the case of sanitary bins, where there is only a small amount of moisture in the air and/or materials inside the bin, it is usual to add a portion of the sterilising agent in powder or granule form. The powder or granules have a large surface area which enables activation by the available moisture to form a sufficient amount of sulphur dioxide for sterilisation.

The powder or granules are usually added by sprinkling them on the bottom of the container, either from a porous container or by opening individual sachets of sterilising agent and pouring the powder or granules into the container.

However, when the sterilising agent is applied in this manner a certain amount of dust from the powder or granules is generated, which can be harmful to a user if inhaled. People with bronchial afflictions, such as asthma, may be especially vulnerable to adverse effects from the dust.

Some sterilising agents for sanitary bins, enclosed spaces and the like are delivered as powder or granules in porous sachets, which allow moisture to penetrate the sachet and sulphur dioxide generated to diffuse out into the bins. However this method of delivery does not prevent all the dust generated by the powder or granules inside the sachet from escaping into the surrounding atmosphere, creating a hazard to the user. Such dust and/or powder release is hazardous to people, particularly those with bronchial complaints, for example asthmatics. Furthermore, the porous sachets are prone to tearing.

It is therefore an object of preferred embodiments of the present invention to provide a sterilising agent which forms sulphur dioxide upon activation with available moisture, in a form which does not produce harmful dust during insertion into an enclosed space.

It is a further object of preferred embodiments of the present invention to provide a sterilising agent which releases sulphur dioxide over a prescribed period of time for efficient sterilisation, for a particular application.

All amounts described herein are a %wt of the total weight of the sterilising composition as added in the form of raw ingredients. It is understood that once the sterilising block absorbs moisture, the relative portions of the individual components of the composition may change, for example the proportion of sulphur dioxide activating compound will decrease on evolution of sulphur dioxide.

According to a first aspect of the present invention there is provided a sterilising block comprising a sterilising composition for use in an airspace within a container, the sterilising composition comprising a sulphur dioxide activating compound, wherein moisture absorbed by the block reacts with the sulphur dioxide activating compound to form sulphur dioxide and wherein the sterilising composition further comprises a hygroscopic compound.

It is believed that the hygroscopic compound increases the rate of release of sulphur dioxide from the sterilising agent by increasing the rate of uptake of moisture into the sterilising block. The hygroscopic compound enables the sterilising composition to be manufactured in a block with limited surface area for use in an airspace which is low in moisture, as it will enable the block to absorb a sufficient amount of moisture from the air and/or waste materials within the airspace to activate the sulphur dioxide activating compound.

Preferably the hygroscopic compound is a hygroscopic alkylbenzenesulphonate, or dialkylbenzenesulphonate. However, other types of hygroscopic material may be used.

A preferred dialkylbenzenesulphonate is diisopropylbenzenesulphonate.

Preferably the hygroscopic compound comprises at least 0.5%wt of the total weight of the sterilising agent, more preferably at least 1%wt.

Preferably the hygroscopic compound comprises no more than 5%wt of the total weight of the sterilising agent, more preferably no more than 2.5% wt.

Thus a preferred range for the hygroscopic compound is 1-2.5%wt of the total weight of the sterilising composition.

The block should be such that it produces an insubstantial amount, and preferably no, harmful dust when inserted into the airspace.

Suitably the block is a tablet or solid gel block. Preferably it is a tablet of consolidated powder or granules.

The sulphur dioxide may, preferably, be in gaseous form and/or may dissolve in water or an aqueous medium present in the air space, and so act, in the form of sulphurous acid or a salt thereof, as a liquid sterilising composition. It will be understood that further volatile compounds of sulphur may be formed, in addition to sulphur dioxide.

Preferably the sterilising composition comprises a polyglycol compound, more preferably a polyethylene glycol compound.

Suitably the polyglycol compound comprises at least 0.5%wt of the total weight of the sterilising composition, preferably at least 1%wt, as added to the sterilising composition.

Preferably the polyglycol compound comprises no more than 10%wt of the total weight of the sterilising composition, more preferably no more than 5% wt, as added to the sterilising composition.

Suitably the sulphur dioxide activating compound is a metabisulphite, preferably sodium metabisulphite or potassium metabisulphite.

Preferably the sulphur dioxide activating compound comprises at least 50% wt of the total weight of the sterilising composition, more preferably at least 60% wt.

Suitably the sulphur dioxide activating compound comprises no more than 95% wt of the total weight of the sterilising composition, preferably no more than 90% wt, more preferably no more than 80% wt.

The sterilising composition may additionally comprise one or more ancilliary ingredients, including a fragrance, a colouring compound, talc, sodium chloride, and a filler.

Suitably each block is supplied in its own sealed space. For example it may be individually wrapped or provided in "blister pack" form.

Alternatively blocks may be packaged together, preferably in a sealed container containing, separately, a hygroscopic agent (for example silica gel) able preferentially to absorb atmospheric moisture, and so prevent premature activation of the sulphur dioxide activating compound. Such a hygroscopic agent may also be employed when each block is supplied in its own sealed space. Thus, the sterilising blocks may be kept in an inactive form until needed, prolonging their shelf-life and subsequent utility.

Preferably the container is generally enclosed. Preferably the container is used for deposit or storage of contaminated, or more preferably biological materials, for example biological soils, microorganisms, or biological waste products.

Preferably the container is a sanitary bin.

Alternatively, the container may be a medical dressing container, a nappy bin, a used sharps bin, a post box, a refrigerator, a body bag or a container used for the disposal or containment of any contaminated or, preferably, biological waste.

When the container is a food refrigerator, the block is preferably placed in a non-airtight container to prevent accidental contact with food contained within the refrigerator.

The invention also provides a method of sterilising an airspace comprising the use of a block as described and defined above.

The following example better serves to illustrate preferred embodiments of the present invention.

### Example 1

The following composition was prepared.

| | % wt of total weight of composition |
|---|---|
| Corn starch | 1.5 |
| Sodium di-isopropylbenzene sulphonate | 1.0 |
| Polyethylene glycol (PEG 6000) | 2.0 |
| Talc | 1.0 |
| Sodium metabisulphite | 75.7 |
| Perfume | 0.8 |
| Sodium chloride | 18.0 |

The dry ingredients were mixed together, with the exception of the perfume, which was subsequently sprayed onto the mixed ingredients. The composition was then granulated and fed into a die wherein the granules were compressed into tablet form by a press having a force of 8 tons.

This composition is of utility in effectively sterilising an airspace within a container.

The composition is particularly useful in sterilising airspaces within containers that contain a relatively low amount of moisture, or contain contaminated materials that are relatively dry.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A sterilising block comprising a sterilising composition for use in an airspace within a container, the sterilising composition comprising a sulphur dioxide activating compound, wherein moisture absorbed by the block reacts with the sulphur dioxide activating compound to form sulphur dioxide and wherein the sterilising composition further comprises a hygroscopic compound.

2. A sterilising block as claimed in Claim 1, wherein the hygroscopic compound is a hygroscopic alkylbenzenesulphonate, or dialkylbenzenesulphonate.

3. A sterilising block as claimed in Claim 1 or 2, wherein the hygroscopic compound comprises at least 0.5%wt of the total weight of the sterilising composition.

4. A sterilising block as claimed in any one of Claims 1 to 3, wherein the hygroscopic compound comprises no more than 5%wt of the total weight of the sterilising composition.

5. A sterilising block as claimed in any preceding claim, wherein the block is a tablet or solid gel block.

6. A sterilising block as claimed in any preceding claim, wherein the sterilising composition comprises a polyglycol compound.

7. A sterilising block as claimed in any preceding claim, wherein the sulphur dioxide activating compound is a metabisulphite.

8. A sterilising block as claimed in any preceding claim, wherein the sulphur dioxide activating compound comprises at least 50% wt of the total weight of the sterilising composition.

9. A sterilising block as claimed in any preceding claim, wherein each block is supplied in its own sealed space.

10. A method of sterilising an airspace comprising the use of a block as described in anyone of Claims 1 to 9.
